# EUROPEAN PATENT APPLICATION

(11) **EP 4 831 005 A1**
(43) Date of publication of application: **28.10.2026**
(21) Application number: 25748047.5
(22) Date of filing: 05.02.2025
(51) Int. Cl.: B60R 11/04

(54) **CAMERA-MOUNTING STRUCTURE, AND VEHICLE**

(30) Priority: 02.02.2024 CN 202410151724
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIU, Lian, Ningbo, Zhejiang 315899 (CN); WU, Shijun, Ningbo, Zhejiang 315899 (CN); LI, Guolin, Ningbo, Zhejiang 315899 (CN)
(74) Representative: Michalski Hüttermann & Partner mbB
(86) International application number: PCT/CN2025/075800
(87) International publication number: WO 2025/162487

(57) **Abstract**

A camera mounting structure, including: a roof assembly (001); a partition (100) fixedly connected to the roof assembly, and configured to separate a driver compartment and a passenger compartment of a vehicle; and a camera apparatus mounted to the partition. The camera mounting structure can provide functions of real-time monitoring, video recording, and photographing for an interior of the driver compartment and a road surface, and can provide functions such as video recording and photographing for the passenger compartment. Further provided is a vehicle.

## Description

### TECHNICAL FIELD

The present disclosure relates to the field of camera technologies, and in particular, to a camera mounting structure and a vehicle.

### BACKGROUND

With acceleration of urbanization and improvement of residents' income levels, automobiles have become one of the preferred modes of travel for more and more families, and the popularity of automobiles in urban and rural areas is also increasing.

At present, in the automobile industry, an interior trim of a vehicle body is often provided with a partition structure. The partition structure is usually disposed between the driver compartment and the passenger compartment of the vehicle to separate the driver compartment and the passenger compartment of the vehicle, and ensure the privacy of the driver compartment and the passenger compartment.

### SUMMARY

The present disclosure provides a camera mounting structure and a vehicle.

In a first aspect, the present disclosure provides a camera mounting structure, including: a roof assembly; a partition fixedly connected to the roof assembly, and configured to separate a driver compartment and a passenger compartment of a vehicle; and a camera apparatus mounted to the partition.

Optionally, the camera apparatus includes a housing component and a camera component, the housing component is mounted on the partition, the housing component has an accommodating space, the housing component includes a first opening in communication with the accommodating space, the camera component is movably connected to the housing component, the camera component includes a camera, and the camera component is configurable in a storage state when the camera component is accommodated in the accommodating space and an operational state when the camera component extends out of the first opening; and a driving component is connected to the housing component.

Optionally, the camera apparatus includes a driving component, the driving component includes a driving portion, the camera component further includes a driving engagement portion, and the driving portion is connected to the driving engagement portion and is configured to drive the camera component to move, so that the camera component is switched between the storage state and the operational state.

Optionally, the first opening is located at a bottom of the housing component, and a movement direction of the camera component relative to the housing component is substantially parallel to a height direction of the vehicle.

Optionally, the partition further includes a glass mounting position configured to mount a lifting glass; and in the operational state, the camera extends out of the first opening and faces the glass mounting position.

Optionally, the camera component further includes a lifting plate and a guide member disposed on the lifting plate, the lifting plate includes the driving engagement portion, the housing component further includes a guide engagement member, the guide member is movably connected to the guide engagement member, and the camera component is movably connected to the housing component through the guide member.

Optionally, the camera component further includes a camera case, the camera case is provided with a second opening, and the lifting plate is provided at and covers the second opening and is detachably connected to the camera case.

Optionally, the camera apparatus further includes a micro switch and a controller disposed in the accommodating space, the controller is respectively connected to the micro switch and the driving component, and the controller is configured to control the driving component according to a state of the micro switch; and the camera component further includes a first trigger, in the storage state, the first trigger abuts against the micro switch, the micro switch is in an open state (or a disconnected state), and the controller controls the driving component to stop according to the open state of the micro switch.

Optionally, the camera component further includes a second trigger, and the second trigger and the first trigger are spaced apart from each other along the movement direction of the camera component; in the operational state, the second trigger abuts against the micro switch, the micro switch is in the open state, and the controller controls the driving component to stop according to the open state of the micro switch.

Optionally, the camera component further includes a position sensor, the position sensor is connected to the controller, the position sensor is configured to generate a position signal according to a position of the camera, and the controller is configured to control the driving component according to the position signal and the state of the micro switch.

Optionally, the housing component includes a first housing and a second housing that are connected with each other, the accommodating space includes a first accommodating cavity and a second accommodating cavity, the first housing includes the first accommodating cavity, the second housing includes the second accommodating cavity, the camera component is disposed in the first accommodating cavity, and the driving component is disposed in the second accommodating cavity.

Optionally, the camera apparatus further includes a transmission assembly, the driving portion of the driving component is connected to the transmission assembly, and the transmission assembly is connected to the driving engagement portion; where the driving component includes a motor, the driving portion is an output shaft of the motor, the driving engagement portion is a rack, the transmission assembly includes a worm, a first double gear and a second double gear, the worm is connected to the output shaft, the first double gear is connected to the worm, and the second double gear is respectively connected to the first double gear and the rack.

Optionally, the camera includes a first lens module and a second lens module, the first lens module faces the driver compartment, and the second lens module faces the passenger compartment.

Optionally, the camera component further includes a camera case, and the camera is rotatably connected to the camera case.

In a second aspect, the present disclosure provides a vehicle, including the camera mounting structure in any of the above.

### BRIEF DESCRIPTION OF DRAWINGS

FIG. 1 is a schematic diagram of a camera mounting structure according to an embodiment;
FIG. 2 is a partially enlarged schematic diagram of a connection structure between a camera apparatus and a partition according to an embodiment;
FIG. 3 is a perspective schematic diagram of a camera apparatus according to an embodiment;
FIG. 4 is an exploded schematic diagram of a camera apparatus according to an embodiment;
FIG. 5 is a top schematic diagram of a housing component according to an embodiment;
FIG. 6 is a top schematic diagram of a camera apparatus according to an embodiment;
FIG. 7 is a schematic diagram of a partial structure of a camera apparatus according to an embodiment;
FIG. 8 is a diagram showing an assembly relationship between a roof assembly and the camera mounting structure shown in FIG. 1;
FIGS. 9A to 9D are a front view, a rear view, a side view, and a bottom view of a partition combined with a camera apparatus, where a state in which the camera component is extended is shown in dashed lines.

Description of reference signs:
10, housing component; 11, first housing; 111, first accommodating cavity; 112, first top cover; 1121, buffer fitting portion; 12, second housing; 121, second accommodating cavity; 122, second top cover; 13, snap-fit; 14, positioning pin; 15, skirt; 16, bolt; 17, fitting groove; 20, camera component; 21, camera case; 211, buffer portion; 22, lifting plate; 221, wiring trough; 222, first trigger; 30, driving component; 40, first wire harness; 41, first connector; 42, second connector; 421, electrical connection terminal; 51, first double gear; 511, first gear; 512, second gear; 52, worm; 53, second double gear; 531, third gear; 532, fourth gear; 61, guide member; 62, guide engagement member; 63, driving engagement portion; 71, controller; 72, micro switch; 73, position sensor; 80, second wire harness; 81, third connector; 90, anti-wear ring; 100, partition; 101, top frame; 102, positioning plate; 103, flange.

### DETAILED DESCRIPTION

Reference will now be made in detail to exemplary embodiments, examples of which are illustrated in accompanying drawings. When the following description refers to the accompanying drawings, unless otherwise indicated, the same numerals in different accompanying drawings indicate the same or similar elements. The implementations described in the following exemplary embodiments do not represent all implementations under the concept of the present disclosure, but rather, they are merely examples of some apparatuses and methods that present the concept of the present disclosure.

The terms used in the present disclosure are for a purpose of describing particular embodiments only, and are not intended to limit the present disclosure. Unless otherwise defined, technical terms or scientific terms used in the present disclosure should have the ordinary meanings understood by those of ordinary skill in the art to which the present disclosure belongs. The terms "first", "second", and the like used in the present disclosure do not indicate any order, quantity or importance, but are only used to distinguish between different components. Similarly, words such as "a" or "an" do not indicate a quantity limitation, but indicate that there is at least one, and if only "one" is indicated, a separate explanation will be provided. "A plurality of" or "several" means two or more. Unless otherwise indicated, the terms "front", "rear", "lower" and/or "upper", "top", "bottom", and the like are only for convenience of description, and are not limited to one position or one spatial orientation. Words such as "include" or "comprise" mean that elements or objects before "include" or "comprise" cover elements or objects listed after "include" or "comprise" and their equivalents, and do not exclude other elements or objects. Words such as "connect" or "couple" are not limited to physical or mechanical connections, and may include electrical connections, whether direct or indirect.

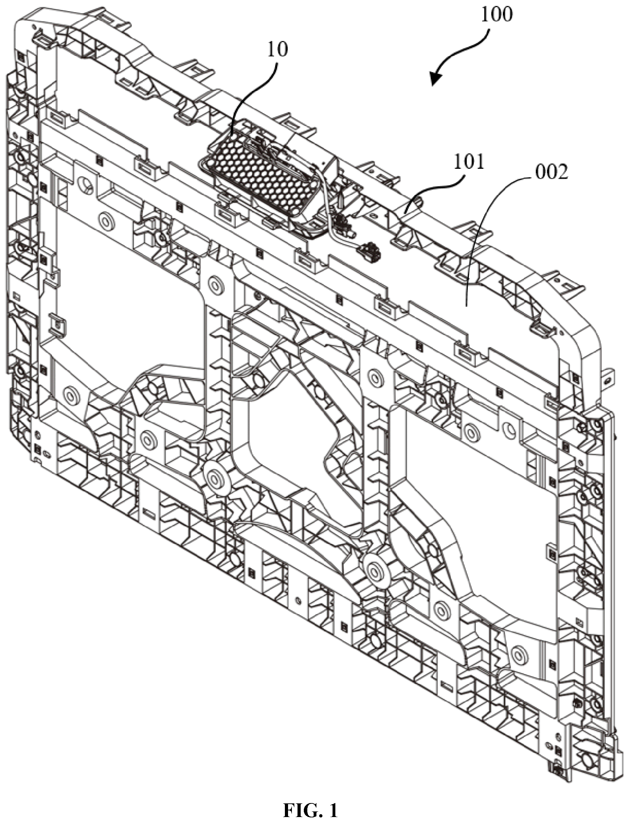

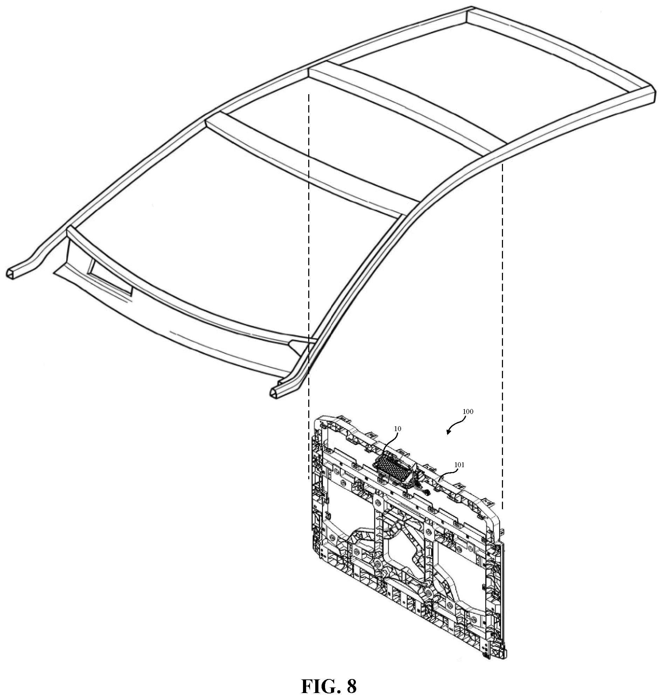

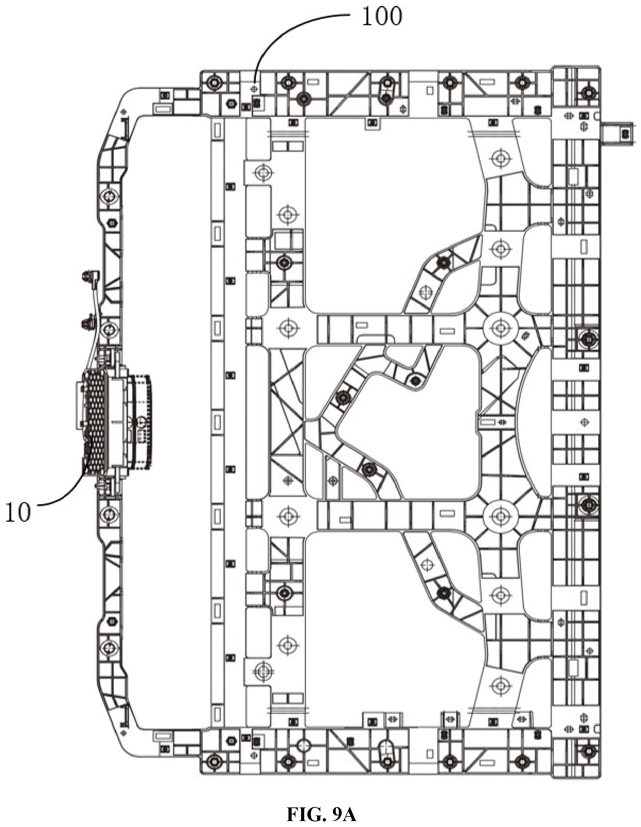

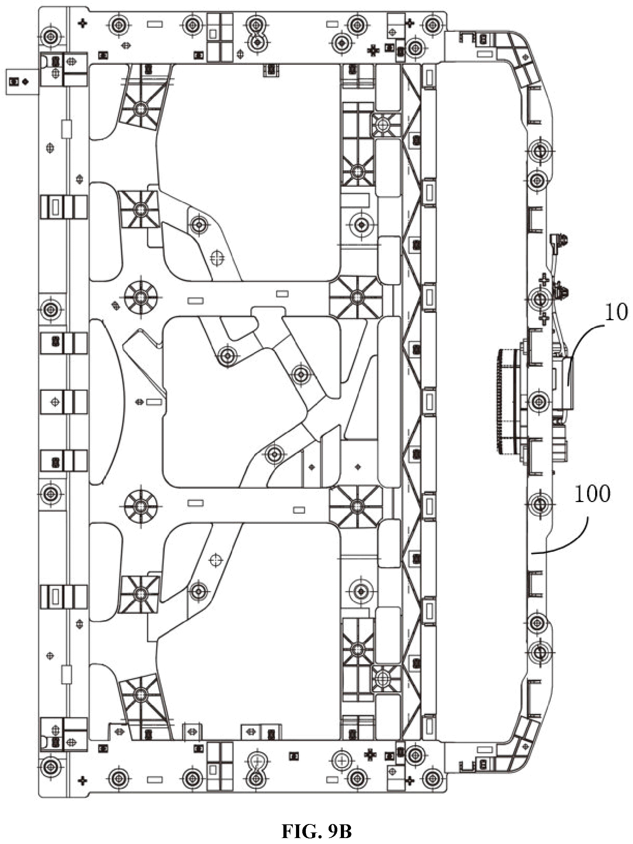

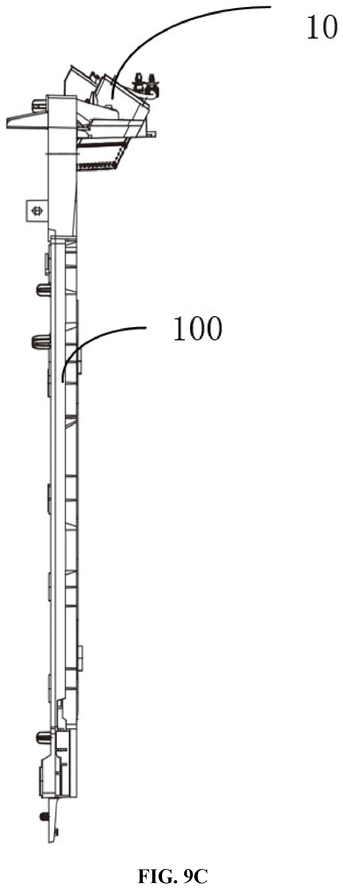

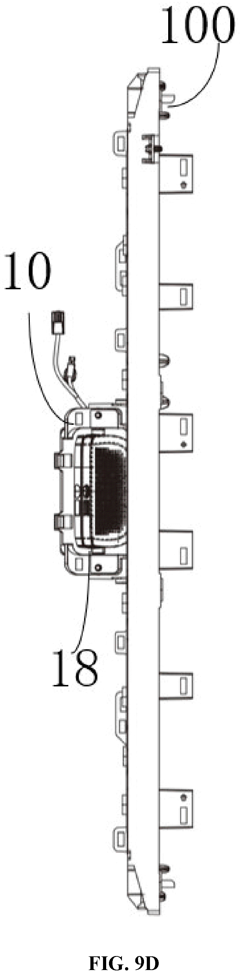

Referring to FIG. 1, FIG. 1 is a perspective schematic diagram of a camera mounting structure. FIG. 8 is a diagram showing an assembly relationship between a roof assembly and the camera mounting structure shown in FIG. 1. FIGS. 9A to 9D are a front view, a rear view, a side view, and a bottom view of a partition combined with a camera apparatus. Embodiments of the present disclosure provide a camera mounting structure applied to a vehicle. The vehicle may be a car, truck, van, sport utility vehicle, or any other type of vehicle with a battery. In an embodiment, the vehicle is a high-voltage traction battery powered electric vehicle (e.g., battery electric vehicle (BEV), hybrid electric vehicle (HEV), plug-in hybrid electric vehicle (PHEV), etc.). In another embodiment, the vehicle is an autonomous vehicle that controls the mobility function of the vehicle without any direct input from a human driver.

The camera mounting structure includes a roof assembly 001, a partition 100, and a camera apparatus. The partition 100 is fixedly connected to the roof assembly 001, and the partition 100 is configured to separate a driver compartment and a passenger compartment of the vehicle, that is, to separate a front space and a rear space of the vehicle. The camera apparatus is mounted on the partition 100.

It can be understood that the camera apparatus can be mounted on a front side of the partition 100 or a rear side of the partition 100. When the camera apparatus is mounted on the front side of the partition 100, it can provide functions of real-time monitoring, video recording, and photographing for an interior of the driver compartment and a road surface, and a user may record a scenery passing by and along the way when driving. When the camera apparatus is mounted on the rear side of the partition 100, it can provide functions such as video recording and photographing for the passenger compartment, and the user may photograph a head photo, an art photo, a short video, etc., thereby enriching the user experience. In summary, the camera apparatus is mounted on the partition 100, which can enrich functions of the partition 100 and improve driving and riding experience of the user. In addition, more options are provided for a mounting position of the camera apparatus, and utilization rate of a hidden space in the vehicle is improved.

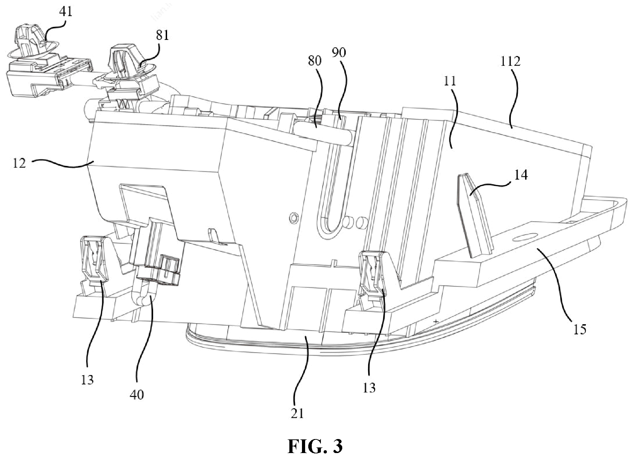

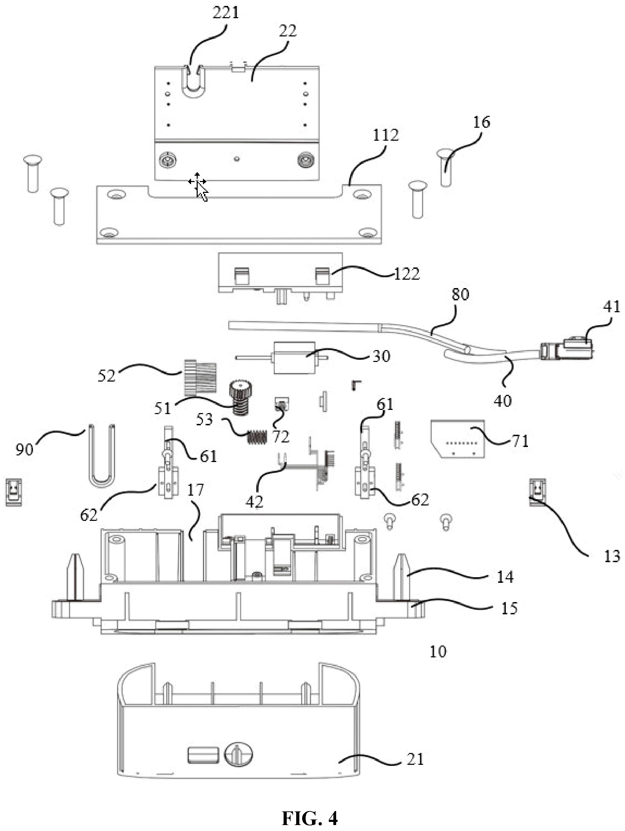

Referring to FIGS. 3 and 4, in an embodiment, the camera apparatus includes a housing component 10, a camera component 20, and a driving component 30. The housing component 10 has an accommodating space, and the housing component 10 includes a first opening 18 in communication with the accommodating space. The camera component 20 includes a camera, and the camera component 20 has a storage state and an operational state. In the storage state, the camera component 20 is accommodated in the accommodating space, and in the operational state, the camera component 20 extends out of the first opening 18. The driving component 30 is disposed in the accommodating space, the driving component 30 includes a driving portion, the camera component 20 further includes a driving engagement portion 63, and the driving portion is drivably connected to the driving engagement portion 63 and is configured to drive the camera component 20 to move, so that the camera component 20 is switched between the storage state and the operational state.

In this way, when the camera needs to be used, the driving portion drives the camera component 20 to move, so that the camera component extends out of the first opening and the camera is exposed, and at this time, the user can use the camera to take pictures or record videos. When the camera is not in use, the driving component 30 may drive the camera component 20 to move, so that the camera component 20 is accommodated in the accommodating space, to save space. In addition, in the storage state, the housing component 10 may protect the camera component 20, prevent the camera component 20 from directly exposing to the outside, reduce a risk of damage to the camera component 20, and prevent dust from accumulating on the camera.

It should be noted that there may be a plurality of operational states, for example, the operational state may include a first operational state and a second operational state, and in the first operational state and the second operational state, the camera component extends out of the first opening, but a height of the camera in the first operational state is different from a height of the camera in the second operational state. There may also be one operational state. For ease of understanding, in the following embodiments, the present disclosure is described only by using one operational state, but it may be understood that the operational state may include a plurality of operational states without contradicting the embodiments.

In an embodiment, the first opening 18 is located at a bottom of the housing component 10, and a movement direction of the camera component 20 relative to the housing component 10 is substantially parallel to a height direction of the vehicle, or forms an angle with the height direction of the vehicle. Preferably, the movement direction of the camera component 20 relative to the housing component 10 is parallel to the height direction of the vehicle, so that when the camera component 20 rises or lowers by a certain height, a relative displacement between the camera component 20 and the housing component 10 is relatively short.

In an embodiment, referring to FIGS. 1, 2 and 3, the partition 100 further includes a glass mounting position 002 configured to mount a lifting glass; and in the operational state, the camera extends out of the first opening and faces the glass mounting position. In this way, no matter whether the camera apparatus is mounted on the front side or the rear side of the partition 100, the camera may take photos and record videos of the driver compartment side and the passenger compartment side through the glass mounting position. In other words, only one camera is provided, so that the needs of both a user in the driver compartment and a user in the passenger compartment can be met, thereby greatly improving the user experience while saving costs. It should be noted that the lifting glass mounted at the glass mounting position may be transparent glass or electrochromic glass with an adjustable transparency, but is not limited thereto.

In an embodiment, the camera may include a first lens module and a second lens module, the first lens module faces the driver compartment, and the second lens module faces the passenger compartment, so that the camera can be used at the driver compartment side and the passenger compartment side. In another embodiment, the camera is configured to be rotatable, so that the user may adjust an orientation of the camera according to requirements. For example, the camera component 20 further includes a camera case 21, and the camera is accommodated in the camera case and is rotatably connected to the camera case 21. In this way, the camera may be switched between the operational state and the storage state through the movable fit between the camera component 20 and the housing component 10, and then the camera may rotate by being rotatably connected to the camera case 21. However, it is not limited thereto. For example, the camera case includes a motor, with a driving gear provided on a rotating shaft of the motor, and the camera is fitted with a gear to cooperate with the driving gear, so that the camera is driven to rotate when the motor rotates. Additionally or optionally, a rotating bearing is further fitted between the camera and the camera case, so that rotation of the camera is more stable.

In an embodiment, the roof assembly 001 includes a roof lining and a roof panel, a mounting space is provided between the roof lining and the roof panel, the partition 100 includes a top frame 101, and the top frame 101 is fixedly connected to the roof panel and is located in the mounting space. In this way, the top frame 101 may not occupy space below the roof lining, thereby improving space utilization inside the vehicle. The camera apparatus is mounted on the top frame 101, and a partial structure of the camera apparatus is located in the mounting space. When the camera component 20 is in the operational state, the camera extends out of the first opening and is located below the roof lining to be used by the user.

In an embodiment, the roof lining includes a front roof lining and a rear roof lining, the front roof lining and the rear roof lining are separately disposed, the front roof lining and the rear roof lining are provided with a gap at the separation therebetween, and the top frame 101 is mounted in the mounting space through the gap. An installer may easily observe a position of the top frame 101 through the gap to ensure the correct mounting of the top frame 101; on the other hand, compared with an integrally formed roof lining, the front roof lining and the rear roof lining which are separately disposed are smaller in volume and lighter in weight, and are easier to transport and mount.

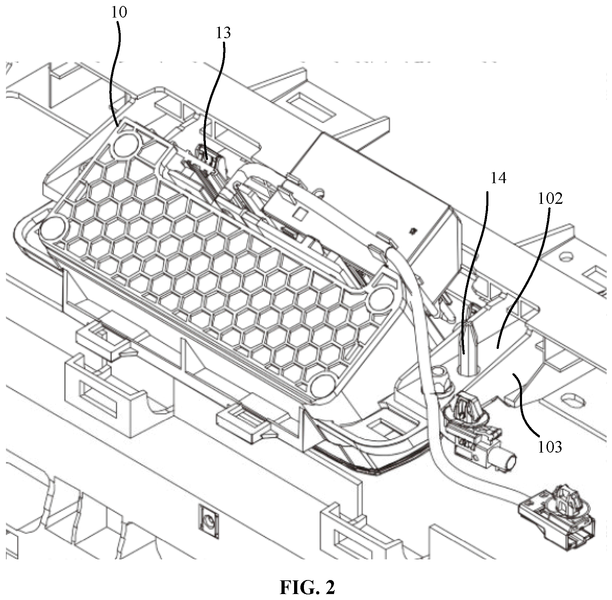

In an embodiment, referring to FIG. 2, the housing component 10 is snap-fitted to the top frame 101. The housing component 10 includes a snap-fit portion, the top frame 101 is provided with a snap-fit engagement portion matched with the snap-fit portion, and the snap-fit portion is in snap-fit connection with the snap-fit engagement portion, so that the housing component 10 is snap-fitted with the top frame 101. There may be a plurality of snap-fit connection forms between the snap-fit portion and the snap-fit engagement portion, for example, lock snap-fit, keyway snap-fit, spring snap-fit, etc.

In the embodiments shown in FIGS. 2, 3 and 4, the housing component 10 includes two snap-fits 13 disposed opposite to each other, the top frame 101 is provided with slots matched with the snap-fits 13, and the snap-fits 13 may be inserted into the slots, respectively, so that the housing component 10 is snap-fitted to the top frame 101. By adopting the snap-fit 13 structure to realize the snap-fit connection of the housing component 10, mounting and dismounting of the housing component 10 may be facilitated while ensuring the mounting strength.

In a further embodiment, the housing component 10 further includes a positioning portion, and the top frame 101 is provided with a positioning fitting portion. Before the housing component 10 is snap-fitted with the top frame 101, the positioning portion may be connected with the positioning fitting portion to determine a mounting position of the housing component 10, and then the housing component 10 is snap-fitted with the top frame 101. In this way, mounting of the housing component 10 can be easier, that is, mounting of the camera apparatus in the embodiment can be simpler.

The housing component 10 further includes two positioning pins 14, the positioning fitting portion of the top frame 101 is a positioning hole, and the positioning pin 14 is inserted into the positioning hole to complete positioning. Specifically, referring to FIGS. 1 to 4, the top frame 101 is a beam structure extending along a width direction of the vehicle. The top frame 101 includes a positioning plate 102 and a mounting plate extending toward the camera apparatus, the positioning plate 102 is provided with a positioning hole matched with the positioning pin 14, and the mounting plate is provided with a slot matched with the snap-fit 13. When mounting the camera apparatus, an operator may insert the positioning pin 14 on the housing component 10 into the positioning hole, and at this time, a position of the snap-fit 13 is a position that the slot of the mounting plate is located, and then the operator may fit the snap-fit 13 in the slot to complete the mounting of the camera apparatus. It may be understood that the number of positioning plates 102 corresponds to the number of positioning holes, and the number of mounting plates may correspond to the number of snap-fits 13. However, it is not limited thereto. For example, in another embodiment, the top frame 101 may include an integrated board extending toward the camera apparatus, and the integrated board is provided with the slot and the positioning hole in the above embodiments, which can also realize the mounting of the camera apparatus. Alternatively, in yet another embodiment, the top frame 101 is provided with the slot and the positioning hole on a bottom wall thereof.

Further, with continued reference to FIGS. 3 and 4, the housing component 10 includes a skirt 15 extending outward, the positioning pin 14 and the snap-fit 13 are both disposed on the skirt 15, a height of a position of the positioning pin 14 is higher than a height of a position of the snap-fit 13, and a length of the positioning pin 14 is greater than a length of the snap-fit 13. In this way, when mounting the housing component 10, the positioning pin 14 may be inserted into the positioning hole first, to implement positioning.

Further, two opposite side ends of the positioning plate 102 are bent upward to form flanges 103, thereby improving the structural strength of the positioning plate 102.

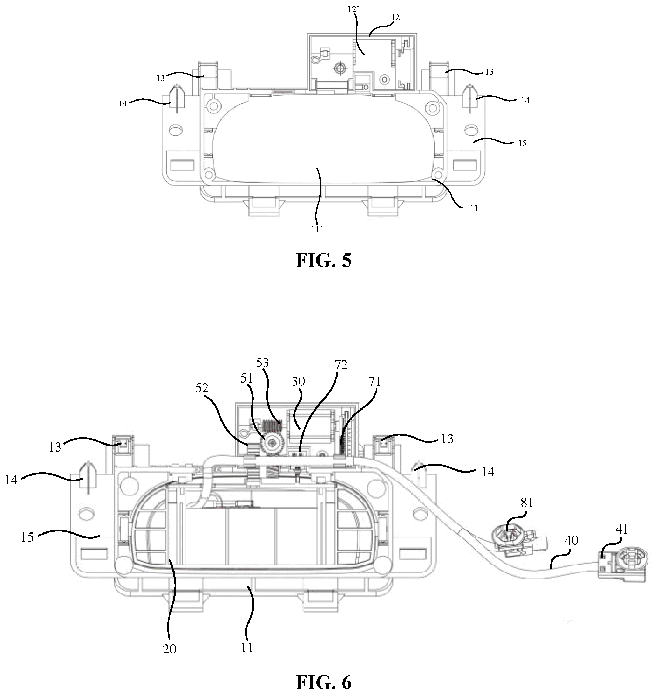

In an embodiment, please refer to FIGS. 4 and 5. The housing component 10 includes a first housing 11 and a second housing 12 that are connected with each other, the accommodating space includes a first accommodating cavity 111 and a second accommodating cavity 121, the first housing 11 includes the first accommodating cavity 111, the second housing 12 includes the second accommodating cavity 121, the camera component 20 is disposed in the first accommodating cavity 111, and the driving component 30 is disposed in the second accommodating cavity 121. It is easy to understand that the camera component 20 and the driving component 30 usually have different sizes and shapes, and the camera component 20 and the driving component 30 are arranged in different cavities separately, enabling more flexible layout and design, making full use of space, and improving compactness and efficiency of the entire camera apparatus. Moreover, the above arrangement may also reduce the transmission of vibration and impact between components. For example, vibration of the driving component 30 is not directly transmitted to the camera, thereby improving stability and image quality of the camera.

In the embodiments shown in FIGS. 4 and 5, a size of the first housing 11 configured to define the first accommodating cavity 111 is matched with a size of the camera component 20, to implement a more compact layout. In the embodiment, since a space required by the driving component 30 is smaller than a space required by the camera component 20, a size of the second housing 12 is smaller than the size of the first housing 11. In some other embodiments, the size of the second housing 12 may also be greater than the size of the first housing 11.

When the camera apparatus is mounted on the partition 100, a bottom end surface of the second housing 12 is configured to extend obliquely downward away from the top frame 101, which may avoid the top frame 101 while saving space, so that the camera apparatus can be mounted to the top frame 101 more smoothly.

It should be noted that, in the embodiment, the second housing 12 is configured to define the second accommodating cavity 121, and the first housing 11 is configured to define the first accommodating cavity 111. Therefore, when the size of the second housing 12 is smaller than the size of the first housing 11, a space of the second accommodating cavity 121 is smaller than a space of the first accommodating cavity 111.

In a further embodiment, soundproof cotton is attached to an inner wall of the second accommodating cavity 121. The soundproof cotton may absorb sound wave energy propagated into the cavity and reduce propagation and reflection of noise. In this way, an influence of the noise generated by the driving component 30 on a surrounding environment may be reduced, and a quieter operation may be provided, thereby improving quietness of the camera component 20 during a lifting and lowering process. In addition, the soundproof cotton may also provide an additional protective layer to reduce an influence of external physical impact and vibration on the driving component 30. This helps to prolong a service life of the driving component 30 and improve its reliability and stability.

In an embodiment, the first housing 11 includes a detachable first top cover 112, and the second housing 12 includes a detachable second top cover 122. Specifically, the first top cover 112 is disposed on a top of the first housing 11 through bolts 16 (or screws), and the second top cover 122 is disposed on a top of the second housing 12 through bolts 16 (or screws). In this way, before the first top cover 112 and the second top cover 122 are mounted, the camera component 20 and the driving component 30 can be mounted in the first accommodating cavity 111 and the second accommodating cavity 121, respectively, and finally the first top cover 112 and the second top cover 122 are mounted, which helps to improve the mounting efficiency.

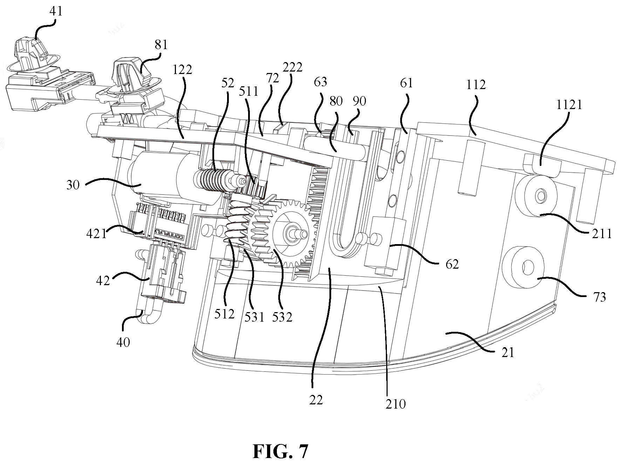

In an embodiment, referring to FIGS. 4 and 7, the camera component 20 further includes a lifting plate 22 and a guide member 61 disposed on the lifting plate 22. The lifting plate 22 includes the driving engagement portion 63, the housing component 10 further includes a guide engagement member 62, the guide member 61 is movably connected to the guide engagement member 62, and the camera component 20 is movably connected to the housing component 10 through the guide member 61. In this way, the camera component 20 may be movably connected to the housing component 10 and drivably connected to the driving component 30 through one lifting plate 22, which has a simple structure and is easy to implement.

One of the guide member 61 and the guide engagement member 62 is a sliding block, and the other is a sliding groove, but it is not limited thereto. In the embodiment shown in FIG. 7, the guide member 61 is a guide rib fixed on the lifting plate 22, the guide engagement member 62 is a guide block fixed on an inner wall of the housing component 10, the guide block is provided with a guide groove matched with the guide rib, and the guide block is slidably connected to the guide rib through the guide groove. During movement of the camera component 20, the guide rib may be slidably fitted with the guide groove of the guide block, so that a sliding process of the camera component 20 is smoother and more accurate.

In a further embodiment, the camera component 20 further includes a camera case 21, the camera case 21 is provided with a second opening 210, and the lifting plate 22 is provided at and covers the second opening, and is detachably connected to the camera case 21. It is easy to understand that since the lifting plate 22 needs to be connected to the housing component 10 and the driving component 30 and needs to bear a relatively large load, the camera case 21 is detachably connected to the lifting plate 22, allowing the camera case 21 and the lifting plate 22 to be made of different materials in a process, so that the strength of the lifting plate 22 is greater than that of the camera case 21. In addition, a thickness of the camera case 21 may be smaller than that of the lifting plate 22 to further improve the strength of the lifting plate 22. Moreover, the lifting plate 22 may be equivalent to a cover plate of the camera component 20, and components such as the camera inside the camera case 21 may be mounted before the lifting plate 22 is mounted. That is, the lifting plate 22 can provide mounting conditions for the components such as the camera inside the camera case 21. In addition, when the camera needs to be maintained and repaired, the lifting plate 22 can be disassembled, and the second opening can be regarded as an access port at this time. Specifically, the lifting plate 22 may be detachably connected to the camera case 21 by using a screw or a bolt.

In an embodiment, the camera component 20 further includes a buffer portion 211 disposed on the camera case 21, and a lower surface of the first top cover 112 is provided with a buffer fitting portion 1121. When the camera component 20 is in the storage state, there is a gap between a top end surface of the camera component 20 and a lower end surface of the first top cover 112, and the top end surface of the camera component 20 abuts against the buffer fitting portion 1121 of the first top cover 112 through the buffer portion 211. In this way, when the camera component 20 moves from the operational state to the storage state, the camera component 20 does not directly contact the first top cover 112, but abuts against the buffer fitting portion 1121 through the soft buffer portion 211, which can buffer the camera component 20. The buffer fitting portion 1121 and the buffer portion 211 may be made of a rubber material, the camera case 21 may be made of plastic, and the lifting plate 22 may be made of a sheet metal material, for example, a steel plate, an aluminum plate, etc., but are not limited thereto.

In an embodiment, referring to FIGS. 6 and 7, the camera apparatus further includes a transmission assembly, the driving portion of the driving component 30 is connected to the transmission assembly, the transmission assembly is connected to the driving engagement portion 63, and the driving portion is connected to the driving engagement portion 63 through the transmission assembly. The transmission assembly plays a role of buffering and damping between the driving component 30 and the camera component 20. The transmission assembly may reduce vibration and impact of the driving component 30 transmitted to the camera, reduce damage and wear to the components of the camera, and protect the stability and service life of the camera.

In a specific embodiment, the driving component 30 includes a motor, the driving portion is an output shaft of the motor, the driving engagement portion 63 is a rack, and a length direction of the rack is parallel to an extension direction of the guide member 61. The transmission assembly includes a worm 52 connected to the output shaft of the motor, a first double gear 51, and a second double gear 53. The worm 52 is connected to the output shaft, the first double gear 51 is connected to the worm 52, and the second double gear 53 is respectively connected to the first double gear 51 and the rack. Specifically, the first double gear 51 includes a first gear 511 matched with the worm 52, and a second gear 512 coaxially coupled to the first gear 511, and the first gear 511 is connected to the worm 52. The second double gear 53 includes a third gear 531 and a fourth gear 532 that are coaxially coupled to each other, both the second gear 512 and the third gear 531 are helical gears, the second gear 512 meshes with the third gear 531, and the fourth gear 532 meshes with the rack. In this way, by adopting the transmission assembly in the above form, the space occupied by the transmission assembly can be reduced, so that the camera apparatus has a more compact overall layout and is easy to mount in the vehicle. Moreover, connections between components of the transmission assembly adopt gear transmission, resulting in low noise and vibration during operation. In some other embodiments, the transmission assembly may also adopt a transmission form of lead screw-nut, and a specific structure thereof may refer to related documents or tool books, which are not specifically described in the embodiments of the present disclosure.

In the embodiments shown in FIGS. 6 and 7, the transmission assembly is also disposed in the second accommodating cavity 121 of the second housing 12, so that on the one hand, a connection between the transmission assembly and the driving component 30 can be facilitated, and on the other hand, the influence of noise and vibration of the transmission assembly on the camera component 20 can be further reduced.

It should be noted that shapes of the camera case 21, the first housing 11, and the second housing 12 may be specifically set according to structures of the camera, the driving component 30, and the transmission assembly, which is not specifically limited in the embodiments of the present disclosure.

In an embodiment, the camera apparatus further includes a first wire harness 40. One end of the first wire harness is provided with a first connector 41, which is reserved outside the accommodating space for electrical connection, and the other end of the first wire harness is provided with a second connector 42, which is located in the accommodating cavity. The second connector 42 has a plurality of electrical connection terminals 421, and the plurality of electrical connection terminals 421 are respectively connected to the driving component 30, a controller 71, and a micro switch 72, and are configured to supply power to the driving component 30, the controller 71, the micro switch 72, and other components.

The camera apparatus further includes a second wire harness 80, one end of the second wire harness 80 is connected to the camera for supplying power to the camera, the other end of the second wire harness 80 is provided with a third connector 81, which is located outside the accommodating space for electrical connection.

In the embodiments shown in FIGS. 3, 4, and 7, the lifting plate 22 is provided with a wiring trough 221, and the wiring trough 221 is U-shaped and is located above the lifting plate 22, but is not limited thereto. The first housing 11 is provided with a fitting groove 17 at a position corresponding to the wiring trough 221, and a shape of the fitting groove 17 is matched with a shape of the wiring trough 221, and is also U-shaped. Further, since the lifting plate 22 may move relative to the second housing 12, a length of the fitting groove 17 is greater than a length of the wiring trough 221. An anti-wear ring 90 is further attached to a peripheral wall of the fitting groove 17, and a shape of the anti-wear ring 90 is matched with the shape of the fitting groove 17, for example, may be U-shaped, but is not limited thereto. The anti-wear ring 90 is made of soft or elastic material, which can prevent the electrical connection wire of the camera from being worn by the peripheral wall of the fitting groove 17 during the movement of the camera component 20.

In an embodiment, the camera apparatus further includes the micro switch 72 and the controller 71 disposed in the accommodating space. The controller 71 is respectively connected to the micro switch 72 and the driving component 30, and the controller 71 is configured to control the driving component 30 according to a state of the micro switch 72. The camera component 20 further includes a first trigger 222, in the storage state, the first trigger 222 abuts against the micro switch 72, the micro switch 72 is in an open state, and the controller 71 controls the driving component 30 to stop according to the open state of the micro switch 72. Specifically, the controller 71 can acquire closed and open states of the micro switch 72, and when the camera component 20 moves to the accommodating space and is in the storage state, the first trigger 222 is against the micro switch 72, so that the micro switch 72 is in the open state, and the controller 71 may acquire that the micro switch 72 is in the open state, and control the driving component 30 to stop according to a signal indicative of the open state.

In a further embodiment, the camera component 20 further includes a second trigger, the second trigger and the first trigger 222 are spaced apart from each other along the movement direction of the camera component 20. In the operational state, the second trigger abuts against the micro switch 72, the micro switch 72 is in the open state, and the controller 71 controls the driving component 30 to stop according to the open state of the micro switch 72. Specifically, the controller 71 can acquire the closed and open states of the micro switch 72, when the camera component 20 is in the operational state, the second trigger is against the micro switch 72, so that the micro switch 72 is in the open state, and the controller 71 may acquire that the micro switch 72 is in the open state, and control the driving component 30 to stop according to the signal indicative of the open state. Specifically, when the micro switch 72 is open, a first signal may be generated, and the controller 71 controls the driving component 30 to stop according to the first signal. In some embodiments, the camera component may have a plurality of operational positions, and a plurality of triggers need to be provided.

With the above arrangement, the controller 71 can acquire whether the camera component 20 moves to the operational state and the storage state, and control the driving component 30 to stop operating when the camera component is in the operational state and the storage state, which helps ensure the safety of the camera component 20 during movement. It should be noted that, during the movement of the camera component 20, that is, when the camera component 20 is in a state other than the operational state and the storage state, the micro switch 72 is in the closed state (or connected state), so that the driving component 30 can operate normally.

In an embodiment, the camera component 20 further includes a position sensor 73 mounted on the camera case 21, the position sensor 73 is connected to the controller 71, the position sensor 73 is capable of generating a position signal, and the controller 71 controls the driving component 30 according to the position signal and the state of the micro switch 72. The position sensor 73 may detect and provide feedback on current position information of the camera component 20, and the controller 71 may read the position signal output by the position sensor 73 to determine the current position information of the camera component 20. In this way, the controller 71 can monitor states of the position sensor 73 and the micro switch 72 in real time, acquire a position change of the camera component 20 in time, and provide an accurate basis for subsequent operations and decisions.

For example, when the micro switch 72 is in the closed state, but the controller 71 detects that the position sensor is always in a fixed position, it may be determined that the camera component 20 cannot move normally, and at this time, the controller 71 can control the driving component 30 to stop operating, thereby reducing a risk.

For another example, when the micro switch 72 fails and cannot be normally disconnected, the controller 71 can also control start and stop of the driving component 30 through the position signal from the position sensor 73.

It should be noted that some other application scenarios are not described in the embodiments, but when these application scenarios are applied to the embodiments, they should all fall within a protection scope of the present disclosure.

Further, a plurality of position sensors 73 may be provided to improve the accuracy of detecting the position of the camera component 20.

It should be noted that the above controller 71 may be a PLC board, a microcontroller, or the like. When the camera apparatus is applied to the vehicle, the controller 71 needs to be connected to a vehicle body processor of the vehicle. The controller 71 may forward the above position signal, the first signal, etc. to the vehicle body processor, the vehicle body processor processes the position signal and the first signal, generates a corresponding control signal, and forwards the control signal to the controller 71, and the controller 71 controls the driving component 30 according to the control signal.

Singular forms of "a", "said", and "the" used in the specification of the present disclosure and the appended claims are also intended to include plural form, unless the context clearly indicates otherwise. It should also be understood that the term "and/or" used herein refers to and includes any or all possible combinations of one or more of the associated listed items.

The above description illustrates only preferred embodiments of the present disclosure, and is not intended to limit the present disclosure. Any modifications, equivalent substitutions, improvements, etc. made within the spirit and principles of the present disclosure should be included within the protection scope of the present disclosure.

## Claims

1. A camera mounting structure, applied to a vehicle, the camera mounting structure comprising:
a roof assembly (001);
a partition (100) fixedly connected to the roof assembly, and configured to separate a driver compartment and a passenger compartment of the vehicle; and
a camera apparatus mounted on the partition.

2. The camera mounting structure according to claim 1, wherein the camera apparatus comprises a housing component (10) and a camera component (20),
wherein the housing component is mounted on the partition, the housing component has an accommodating space, and the housing component comprises a first opening in communication with the accommodating space,
wherein the camera component is movably connected to the housing component, and
wherein the camera component comprises a camera, and the camera component is configurable in a storage state when the camera component is accommodated in the accommodating space and an operational state when the camera component extends out of the first opening.

3. The camera mounting structure according to claim 2, wherein the camera apparatus further comprises a driving component (30), the driving component being connected to the housing component and comprising a driving portion,
wherein the camera component further comprises a driving engagement portion (63), and
wherein the driving portion is connected to the driving engagement portion, and is configured to drive the camera component to move, so that the camera component is switched between the storage state and the operational state.

4. The camera mounting structure according to claim 2 or 3, wherein the first opening is located at a bottom of the housing component, and a movement direction of the camera component relative to the housing component is substantially parallel to a height direction of the vehicle.

5. The camera mounting structure according to any one of claims 2 to 4, wherein the partition further comprises a glass mounting position (002) configured to mount a lifting glass; and
wherein in the operational state, the camera extends out of the first opening and faces the glass mounting position.

6. The camera mounting structure according to any one of claims 3 to 5, wherein the camera component further comprises a lifting plate (22) and a guide member (61) disposed on the lifting plate, the lifting plate comprises the driving engagement portion (63), the housing component further comprises a guide engagement member (62), the guide member is movably connected to the guide engagement member, and the camera component is movably connected to the housing component through the guide member.

7. The camera mounting structure according to claim 6, wherein the camera component further comprises a camera case (21), the camera case comprises a second opening (210), and the lifting plate is provided at and covers the second opening and is detachably connected to the camera case.

8. The camera mounting structure according to any one of claims 3 to 7, wherein the camera apparatus further comprises a micro switch (72) and a controller (71) disposed in the accommodating space, the controller is connected to the micro switch and the driving component, respectively, and the controller is configured to control the driving component according to a state of the micro switch,
wherein the camera component further comprises a first trigger (222), and
wherein in the storage state, the first trigger abuts against the micro switch, the micro switch is in an open state, and the controller controls the driving component to stop according to the open state of the micro switch.

9. The camera mounting structure according to claim 8, wherein the camera component further comprises a second trigger, and the second trigger and the first trigger are spaced apart from each other along a movement direction of the camera component; and
wherein in the operational state, the second trigger abuts against the micro switch, the micro switch is in the open state, and the controller controls the driving component to stop according to the open state of the micro switch.

10. The camera mounting structure according to claim 8 or 9, wherein the camera component further comprises a position sensor (73), the position sensor is connected to the controller, the position sensor is configured to generate a position signal according to a position of the camera, and the controller is configured to control the driving component according to the position signal and the state of the micro switch.

11. The camera mounting structure according to any one of claims 2 to 10, wherein the housing component comprises a first housing (11) and a second housing (12) that are connected with each other, the accommodating space comprises a first accommodating cavity (111) and a second accommodating cavity (121), the first housing comprises the first accommodating cavity, the second housing comprises the second accommodating cavity, the camera component is disposed in the first accommodating cavity, and the driving component is disposed in the second accommodating cavity.

12. The camera mounting structure according to any one of claims 3 to 11, wherein the camera apparatus further comprises a transmission assembly, a driving portion of a driving component is connected to the transmission assembly, and the transmission assembly is connected to the driving engagement portion; wherein the driving component comprises a motor, the driving portion is an output shaft of the motor, the driving engagement portion (63) is a rack, the transmission assembly comprises a worm (52), a first double gear (51), and a second double gear (53), the worm is connected to the output shaft, the first double gear is connected to the worm, and the second double gear is respectively connected to the first double gear and the rack.

13. The camera mounting structure according to any one of claims 1 to 12, wherein the camera comprises a first lens module and a second lens module, the first lens module faces the driver compartment, and the second lens module faces the passenger compartment.

14. The camera mounting structure according to any one of claims 1 to 12, wherein the camera component further comprises a camera case (21), and the camera is rotatably connected to the camera case.

15. A vehicle, comprising:
the camera mounting structure according to any one of claims 1 to 14.
